Europäisches Patentamt

(19) European Patent Office

Office européen des brevets

(11) Numéro de publication: **0 318 361**
**A1**

(12) **DEMANDE DE BREVET EUROPEEN**

(21) Numéro de dépôt: **88402886.1**

(22) Date de dépôt: **17.11.88**

(51) Int. Cl.⁴: **B 01 D 29/38**

(30) Priorité: **25.11.87 FR 8716332**

(43) Date de publication de la demande:
**31.05.89 Bulletin 89/22**

(84) Etats contractants désignés: **DE NL SE**

(71) Demandeur: **COMBUSTION ENGINEERING EUROPE S.A.R.L.**
**10 avenue de Concyr**
**F-45071 Orleans Cédèx 2 (FR)**

(72) Inventeur: **Darchambeau, Alain**
**6 rue du Tabor**
**F-45000 Orléans (FR)**

(74) Mandataire: **Bloch, Gérard et al**
**2, square de l'Avenue du Bois**
**F-75116 Paris (FR)**

(54) **Appareil de filtrage auto-nettoyant.**

(57) Il comporte un corps (1), avec un panier de filtrage intérieur (8) communiquant avec une canalisation (3) d'entrée du produit à filtrer et un drain (12) d'évacuation de rejets et ménageant, avec le corps (1), un espace périphérique (13) communiquant avec une canalisation (4) de sortie du filtrat. Des racleurs rotatifs (20) nettoyent l'intérieur du panier (8). L'espace périphérique (13) communique avec la canalisation (4) par un étranglement annulaire (14).

L'appareil est bien adapté comme conditionneur de sauce de couchage.

FIG.1

Bundesdruckerei Berlin

EP 0 318 361 A1

## Description

### Appareil de filtrage auto-nettoyant

La présente invention concerne un appareil de filtrage d'un produit à filtrer, auto-nettoyant, comportant un corps, un panier de filtrage intérieur communiquant avec une canalisation d'entrée du produit à filtrer et un drain d'évacuation de rejets et ménageant, avec le corps, un espace périphérique communiquant avec une canalisation de sortie du filtrat, des racleurs étant agencés pour être entraînés en rotation à l'intérieur du panier et le nettoyer.

Les applications d'un tel appareil sont nombreuses, pour ne pas dire universelles, et on le rencontre dans la plupart des industries de transformation où il faut filtrer par exemple des solvants, des adhésifs, des colles, des polymères, des émulsions, des boues, des résines, des peintures, des vernis, des graines, des goudrons, des pigments, des détergents, des produits alimentaires, etc.

On le rencontre également dans l'industrie papetière, et notamment comme conditionneur de sauce de couchage, qui est un liquide de viscosité moyenne (1000 à 2000 cp). C'est en considérant cette application particulière que la demanderesse a posé le problème qui se trouve à l'origine de l'invention de la présente demande. Cette application va donc être décrite un peu plus en détails. Cependant, la demanderesse n'entend absolument pas limiter la portée de sa demande pour autant, la description de cette application particulière n'ayant qu'une finalité purement pédagogique. L'invention s'applique à des produits de viscosité quelconque.

Le papier brut ne permet pas une impression par encrage parfaite, à cause du caractère irrégulier et absorbant de sa surface. Il faut donc éliminer les irrégularités, boucher les pores et donner au papier un aspect approprié. A cet effet, on enduit le papier brut d'une sauce de couchage, qui est un liquide de viscosité moyenne, à un poste de la machine à papier situé entre les cylindres de séchage du papier brut et le poste de séchage du papier couché.

Avant d'être introduite dans le conditionneur, la sauce de couchage est d'abord agitée dans des cuviers et filtrée à travers un tamis vibrant, si bien qu'elle s'enrichit considérablement en air ; les impuretés d'air sont souvent plus préjudiciables que les impuretés solides.

La présente invention vise donc principalement à éliminer au mieux les bulles d'air du produit à filtrer.

A cet effet, la présente invention concerne un appareil de filtrage du type mentionné ci-dessus, caractérisé par le fait que ledit espace périphérique communique avec la canalisation de sortie du filtrat par un étranglement annulaire.

Grâce à cet étranglement annulaire, l'espace périphérique est légèrement pressurisé, si bien que le gradient de pression de part et d'autre du panier de filtrage s'en trouve réduit. Le risque de colmatage du panier de filtrage et de dépôt d'impuretés solides sur sa paroi intérieure s'en trouve également réduit. Il en résulte que les bulles d'air piégées dans le produit à filtrer, et à la suite de l'action des racleurs, ont plus de chance de pouvoir grossir régulièrement et sans déformation destructrice et de monter le long de la paroi intérieure du panier avant d'être évacuées en partie supérieure.

L'étranglement de l'invention présente également l'avantage, avec la diminution du gradient de pression induite, de réduire la vitesse de passage du produit à travers le panier de filtrage, ce qui réduit le risque de colmatage le filtrat reprenant une bonne vitesse d'écoulement, au passage dans cet étranglement.

Grâce encore à ce rétrécissement d'évacuation du filtrat, la surpression qui règne dans la zone périphérique fait office de moyens de brassage, et aucun moyens particuliers n'est ainsi à prévoir pour agiter le filtrat. En outre, cette surpression évite que le filtrat ne reste trop longtemps dans cette zone.

Dans la forme de réalisation préférée de l'appareil de filtrage de l'invention, le panier de filtrage comporte une pluralité de colonnes, espacées les unes des autres, de fentes horizontales de filtrage. Les zones mortes, entre deux colonnes adjacentes de fentes de filtrage, empêchent ainsi les racleurs d'entraîner les impuretés sur tout le tour du panier, ce qui réduit encore le risque de colmatage.

Avantageusement, la section des fentes du panier de filtrage comporte, du côté amont, une cheminée de filtrage et, du côté aval, un évasement de nettoyage.

L'invention sera mieux comprise à l'aide de la description suivante de la forme de réalisation préférée de l'appareil de filtrage de l'invention, en référence aux dessins annexés, sur lesquels :

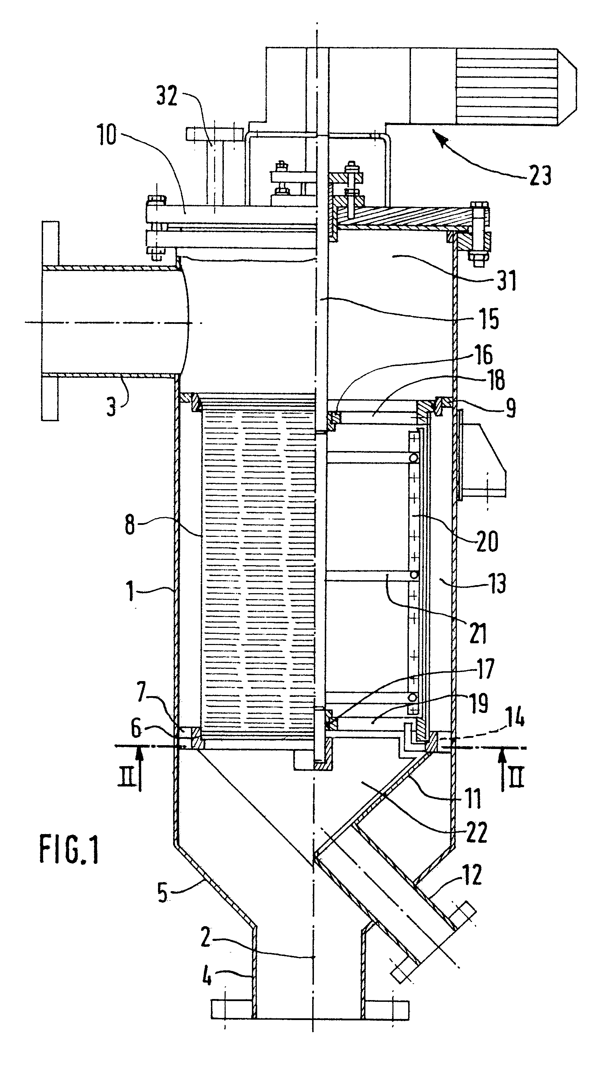

- la figure 1 est une vue en demi-coupe axiale de l'appareil de l'invention ;

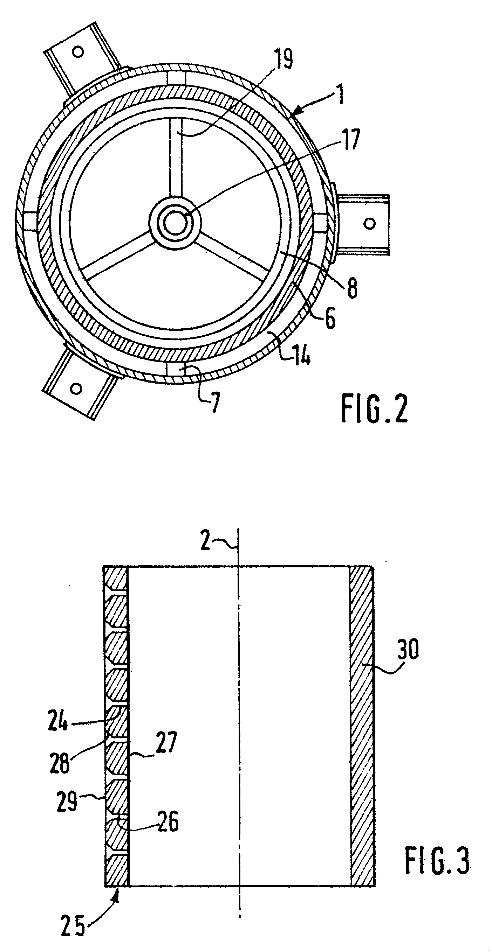

- la figure 2 est une vue en coupe transversale de l'appareil selon la ligne II-II de la figure 1, et
- la figure 3 est une vue en coupe axiale du panier de filtrage de l'appareil de l'invention.

L'appareil comporte un corps, ou caisson, cylindrique 1, d'axe 2, avec une canalisation d'entrée 3, débouchant latéralement, ou radialement, dans la partie haute du caisson, et une canalisation de sortie axiale 4, en partie basse, raccordée à la portion cylindrique droite du caisson par une jupe tronconique 5.

Une couronne-support circulaire 6 est fixée, par des pattes 7, à la paroi interne du caisson, dans la partie inférieure du caisson, mais à un niveau sensiblement plus élevé que celui du raccordement de la jupe tronconique 5. Sur cette couronne-support 6, est posé, avec interposition d'un joint, le bord inférieur d'un panier de filtrage 8. Le bord supérieur du panier 8 est maintenu, en partie haute, et avec interposition d'un joint, contre une autre couronne 9 fixée aussi, mais directement, à la paroi interne du caisson.

Le caisson est fermé, à sa partie supérieure, par un couvercle 10.

Sous la couronne-support inférieure 6 est fixée de façon étanche une trémie tronconique 11, de laquelle débouche un drain d'évacuation 12 traversant la jupe tronconique 5.

La couronne-support inférieure 6 a un diamètre externe plus petit que le diamètre de la paroi interne du caisson 1, sensiblement de la dimension radiale des pattes 7 ; cette dimension radiale des pattes 7 est plus petite que la largeur radiale de l'espace annulaire périphérique 13 ménagé entre le caisson 1 et le panier 8. La couronne-support 6 et le caisson 1 forment ainsi, à la partie inférieure de la zone périphérique 13, un étranglement annulaire 14.

Le panier de filtrage 8 communique ainsi, par le haut, avec la canalisation d'entrée 3, à travers l'espace du caisson ménagé entre le couvercle 10 et le panier 8, formant une chambre de décompression 31, et, par le bas, avec le drain d'évacuation 12, à travers la trémie 11. La zone périphérique 13, quant à elle, communique avec la canalisation de sortie 4 à travers l'étranglement annulaire 14.

Un arbre d'entraînement 15 s'étend le long de l'axe 2, traverse le couvercle 10, et est maintenu dans deux paliers 16, 17 solidaires respectivement des bords supérieur et inférieur du panier 8 par des bras radiaux 18, 19. L'arbre 15 porte, dans la zone axiale du panier 8, deux paires de lames de raclage 20, fixées à lui par des bras 21, et, dans la zone axiale de la trémie 11, une palette triangulaire de brassage 22. L'arbre 15 peut être entraîné en rotation par un groupe motoréducteur 23, fixé sur le couvercle du caisson.

Le panier de filtrage 8 est formé, outre des armatures 18, 19 supports des paliers de l'arbre 15, d'un écran constitué d'une feuille épaisse, ici en acier inoxydable, enroulée et refermée sur elle-même bord à bord, en un cylindre d'axe 2. Des colonnes 25 de fentes allongées 24, orthogonales à l'axe 2, ont été usinées à travers la feuille écran. La section axiale de chaque fente comporte, du côté amont, une cheminée de filtrage 26, s'étendant depuis la paroi interne 27 de l'écran, et prolongée, du côté aval, par un évasement de nettoyage 28, débouchant sur la paroi externe 29 de l'écran. Les colonnes 25 de fentes sont espacées angulairement les unes des autres pour ménager entre elles des bandes verticales pleines 30 formant des zones mortes.

Ayant décrit la structure de l'appareil de filtrage, son fonctionnement peut maintenant être abordé.

Le produit à filtrer, par exemple une sauce de couchage, aspiré d'un cuvier par une pompe qui le refoule, arrive, par la canalisation d'entrée 3, dans la chambre de décompression 31 de l'appareil, avant de pénétrer dans le volume intérieur du panier 8. Le filtrat traverse l'écran par les fentes 24 avant de s'écouler par la zone périphérique 13, l'étranglement annulaire 14 et la canalisation de sortie 4. Les impuretés, quant à elles, sont rejetées, à travers la trémie 22, par le drain 12. Le filtrat est envoyé, dans le cas évoqué ici, dans le bac d'une coucheuse.

Du fait de la tension superficielle régnant sur les bords des fentes de filtrage 24, ces bords sont recouverts d'une pellicule du produit à filtrer, dite, dans le jargon de métier, de "beurrage", qui réduit avantageusement l'ouverture des fentes. Grâce à la chambre de décompression 31, cette pellicule n'est pas détruite et la qualité du filtrat préservée.

Les impuretés piégées par les fentes de filtrage 24, par l'action des racleurs 20 entraînés en rotation, sont repoussées vers l'une des extrémités des fentes, jusqu'à la zone morte adjacente 30. Les bulles d'air montent alors dans l'appareil avant d'être évacuées en partie supérieure par une purge 32. Les impuretés plus lourdes que le produit à filtrer tombent dans la trémie 11 avant d'être évacuées par le drain 12. La palette de brassage 22 entraînée en rotation évite la solidification, la sédimentation et/ou la fermentation des déchets.

Grâce à la forme des fentes 24, la pellicule superficielle n'est pas détruite et aucun colmatage ne se produit, l'évasement aval 28 diminuant la pression.

Cette pression, dans la zone périphérique 13 est augmentée du fait de l'étranglement annulaire 14. Il en résulte un gradient de pression, de part et d'autre de l'écran du panier de filtrage 8, relativement faible, avec les avantages clairement soulignés plus haut.

A l'intérieur du panier de filtrage, le produit à filtrer est brassé par raclage. A l'extérieur du panier, dans la zone périphérique, le filtrat est brassé par surpression.

L'écoulement du filtrat est ralenti au passage de l'écran de filtrage, mais il est accéléré au passage de l'étranglement annulaire, où il retrouve la bonne vitesse.

On notera que si, inopinément, la pression à l'entrée du circuit de filtrage augmente, c'est à l'intérieur du panier de filtrage que la pression augmente, et que le panier peut parfaitement résister à l'augmentation du gradient de pression de part et d'autre de l'écran de filtrage, qui en résulte ; en d'autre termes, le panier résiste mieux à une tendance à l'explosion qu'à une tendance à l'implosion.

L'appareil de filtrage qui vient d'être décrit est auto-nettoyant, sans nécessité d'un lavage à contre-courant, et il permet d'éliminer des particules relativement fines. Il peut donc fonctionner en continu, sans frais d'entretien notables.

**Revendications**

1. Appareil de filtrage d'un produit à filtrer, auto-nettoyant, comportant un corps (1), avec un panier de filtrage intérieur (8) communiquant avec une canalisation (3) d'entrée du produit à filtrer et un drain (12) d'évacuation de rejets et ménageant, avec le corps (1), un espace périphérique (13) communiquant avec une canalisation (4) de sortie du filtrat, des racleurs (20) étant agencés pour être entraînés en rotation à l'intérieur du panier et le nettoyer, caractérisé par le fait que ledit espace périphérique (13) communique avec la canalisation (4) de sortie du filtrat par un étranglement annulaire (14).

2. Appareil selon la revendication 1, dans lequel ledit étranglement annulaire (14) est formé entre ledit corps (1) et une couronne support (6) du panier de filtrage (8).

3. Appareil selon la revendication 2, dans lequel ladite couronne support (6) est fixée au corps (1) par des pattes (7).

4. Appareil selon l'une des revendications 1 à 3, dans lequel le panier de filtrage comporte une pluralité de colonnes (25), espacées les unes des autres, de fentes horizontales de filtrage (24).

5. Appareil selon la revendication 4, dans lequel lesdites fentes (24) comportent, du côté amont, une cheminée de filtrage (26) et, du côté aval, un évasement de nettoyage (28).

FIG.1

FIG.2

FIG.3

Office européen
des brevets

RAPPORT DE RECHERCHE EUROPEENNE

Numero de la demande

EP 88 40 2886

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 629 848 (GERVASI) <br> * page 10, lignes 14-35; page 12, lignes 7-14; figures 1,5 * <br> --- | 1-3 | B 01 D 29/38 |
| A | EP-A-0 187 553 (E + M LAMORT S.A.) <br> * abrégé; page 1, lignes 1-8; page 2, lignes 36-39; page 3, lignes 1-4; figure 1 * <br> --- | 1,4,5 | |
| A | PATENT ABSTRACTS OF JAPAN <br> vol. 11, no. 139 (C-420)(2586), 7 mai 1987; & JP - A - 61 278 314 (EBARA CORP.) 09-12-1986 * abrégé * <br> --- | 1,4,5 | |
| A | US-A-3 762 563 (PETERSEN) <br> ----- | | |

DOMAINES TECHNIQUES RECHERCHES (Int. Cl.4)

B 01 D 29/38
B 01 D 41/04
B 01 D 29/30

Le présent rapport a été établi pour toutes les revendications

| Lieu de la recherche | Date d'achèvement de la recherche | Examinateur |
|---|---|---|
| BERLIN | 11-01-1989 | CORDERO ALVAREZ M. |